(19) Europäisches Patentamt / European Patent Office / Office européen des brevets

(11) **EP 2 875 869 A1**

(12) **EUROPÄISCHE PATENTANMELDUNG**

(43) Veröffentlichungstag:
   **27.05.2015 Patentblatt 2015/22**

(21) Anmeldenummer: **13005447.1**

(22) Anmeldetag: **20.11.2013**

(51) Int Cl.:
   *B03C 7/00* (2006.01)     *C01D 15/00* (2006.01)
   *C01D 15/08* (2006.01)

(84) Benannte Vertragsstaaten:
   **AL AT BE BG CH CY CZ DE DK EE ES FI FR GB
   GR HR HU IE IS IT LI LT LU LV MC MK MT NL NO
   PL PT RO RS SE SI SK SM TR**
   Benannte Erstreckungsstaaten:
   **BA ME**

(71) Anmelder: **K+S Aktiengesellschaft**
   **34131 Kassel (DE)**

(72) Erfinder:
   • **Piesik, Dirk**
     **36043 Fulda (DE)**
   • **Wachsmuth, Uwe**
     **37242 Bad Sooden-Allendorf (DE)**
   • **Waldmann, Ludger**
     **48291 Telgte (DE)**

(54) **Verfahren zur Aufbereitung von Lithiumsalzen aus Rohsalzen**

(57) Die vorliegende Erfindung betrifft ein Verfahren zur Anreicherung und gegebenenfalls Aufreinigung von Lithiumsalzen aus Salzgemengen und/oder Mineralgemengen, wobei dieses mittels eines ein- oder mehrstufigen elektrostatischen Trennverfahrens erfolgt und die Salz- bzw. Mineralgemenge vor dem Trennen mit geeigneten Mitteln konditioniert werden. In einem weiteren Aspekt richtet sich die Erfindung auf die Verwendung bestimmter Carbonsäuren, Alkohole, Alkansäuren und Hydroxycarbonsäuren, Salze hiervon oder deren Derivate und Salze hiervon allein oder als Mischungen zur Konditionierung von Salzgemengen und/oder Mineralgemengen zur elektrostatischen Trennung von Lithiumsalzen.

EP 2 875 869 A1

**Beschreibung**

Die vorliegende Erfindung betrifft ein Verfahren zur Anreicherung und gegebenenfalls Aufreinigung von Lithiumsalzen aus Salzgemengen und/oder Mineralgemengen, wobei dieses mittels eines ein- oder mehrstufigen elektrostatischen Trennverfahrens erfolgt und die Salz- bzw. Mineralgemenge vor dem Trennen mit geeigneten Mitteln konditioniert werden. In einem weiteren Aspekt richtet sich die Erfindung auf die Verwendung bestimmter Carbonsäuren, Alkohole, Alkansäuren und Hydroxycarbonsäuren, Salze hiervon oder deren Derivate und Salze hiervon allein oder als Mischungen zur Konditionierung von Salzgemengen und/oder Mineralgemengen (zur elektrostatischen Trennung von Lithiumsalzen.

**Stand der Technik**

Lithium nimmt eine immer wichtigere Rolle als Metall oder als Bestandteil von lithiumhaltigen Verbindungen in der Industrie und in allen Lebensbereichen ein. Lithium und Lithiumsalze sowie entsprechende lithiumhaltige Verbindungen und Legierungen finden unter anderem Anwendung in der Glas- und Keramikindustrie.
Ein anderer wesentlicher Aspekt ist der Einsatz von Lithium in Batterien, insbesondere da Lithiumbatterien eine hohe Energiedichte und somit eine hohe Spannung erzeugen können. Weiterhin findet Lithium in Lithium-Ionen-Akkumulatoren, die in der Automobilindustrie eine große Rolle spielen, Verwendung. Vor allem durch die vielseitigen Anwendungen, wie z.B. den Einsatz in der Gtasindustrie bei der Herstellung von Emaille, in der Aluminiumherstellung und in der Automobilindustrie in Folge des Ausbaus der Elektromobilität in den genannten Lithium-Ionen-Akkumulatoren sind Lithium und seine Verbindungen und hier insbesondere Lithiumcarbonat, Lithiumhydroxid, Lithiumchlorid und Lithiumbromid, immer mehr in den Fokus der Industrie gelangt. Entsprechend finden große Anstrengungen statt, den Abbau lithiumhaltiger Ressourcen voranzutreiben und effiziente Methoden zur Gewinnung von lithiumhaltigen Verbindungen, wie Lithiumsalzen, zu erlauben. Es gibt mittlerweile Berichte, dass der Bedarf an Lithium und seine Verbindungen, wie der Lithiumsalze, die globale Verfügbarkeit in naher Zukunft übersteigt.
Bei den industriell vermarkteten Lithiumsalzen handelt es sich bevorzugt um Lithiumcarbonat ($Li_2CO_3$) oder Lithiumhydroxid und Lithiumchlorid.
Lithium kommt in der Natur aufgrund seiner hohen Reaktivität nicht elementar vor. Vielmehr liegt es entweder in einigen Mineralien vor, wie z.B. Spodumen, Lepidolith, Petalit oder Amblygonit. Eine Gewinnung von lithiumhaltigen Verbindungen aus diesen Mineralien ist mit sehr großem Aufwand verbunden, da Lithium hier meist nur in geringen Konzentrationen vorliegt. Aufbereitet werden diese Mineralien durch unterschiedliche Verfahren, nach einer Aufkonzentrierung erfolgt die Weiterverarbeitung üblicherweise durch einen alkalischen Aufschluss ("lime roast" Verfahren) mit gebranntem Kalk oder durch sauren Aufschluss ("acid roast" Verfahren) mit Schwefelsäure. In weiteren Folgeprozessen wird dann Lithiumcarbonat oder Lithiumhydroxid hergestellt.
Eine weitere Gewinnungsmethode von lithiumhaltigen Verbindungen stellt die solare Evaporation von lithiumchloridhaltigen Salzlösungen in natürlich vorkommenden Salaren oder Salzwasserquellen/-bohrungen dar. Zum Beispiel erfolgt eine Gewinnung aus Salzseen, die in Argentinien, den USA, China oder Chile, liegen, aber auch in Bolivien, wo für den Salzsee Salar de Uyuni angenommen wird, dass hier eine der größten Lithiumlagerstätten liegt.
Das Evaporationsverfahren zur Gewinnung von Lithiumverbindungen zeichnet sich durch eine fraktionierte Kristallisation der Lösung aus, um Lithiumchlorid in der Salzlösung auf zu konzentrieren und Nebenbestandteile abzutrennen. Anschließend wird durch Zugabe von Carbonat, z.B. in Form von Natriumcarbonat, aus dem in der Salzlösung enthaltenen Lithiumchlorid das schwer lösliche Lithiumcarbonat auskristallisiert. Dieses Lithiumcarbonat kann dann durch entsprechende weitere Bearbeitung zu einem hoch reinen Produkt gereinigt werden.
In den natürlichen Salzlösungen liegen neben Lithium hauptsächlich Natrium, Kalium, Magnesium und Calcium als Kationen und Chlorid und Sulfat als Anionen vor.
Die Auftrennung von Rohsalzen aus Kalilagerstätten ist bekannt, so beschreibt zum Beispiel G. Fricke, Kali und Steinsalz, 1986, 9, 278 bis 297, ein Aufreinigen des Minerals Kieserit aus Röhsalzen mit Hilfe des trockenen elektrostatischen Trennverfahrens. Dazu wird Rohsalz vermahlen, auf eine vorgegebene Korngröße klassiert, mit einer geringen Menge Konditionierungsmittel, bei dem es sich meist um eine organische Verbindung handelt, versehen und mit Luft bestimmter Temperatur und Feuchte verwirbelt, triboelektrisch aufgeladen und das Gemenge im elektrostatischen Feld in eine Kieseritrohfraktion und eine Kalirohfraktion getrennt.
Als Konditionierungsmittel werden dabei verschiedene organische Verbindungen eingesetzt. So beschreibt die DE 1 667 814 ein solches Trennverfahren zur Gewinnung des Minerals Kieserit in einem ersten Schritt aus einem kieserithaltigen Kalirohsalz unter Verwendung aliphatischer, unverzweigter Fettsäuren der Kettenlänge $C_3$ bis $C_8$ oder aromatischer Carbonsäuren oder einem Gemisch der beiden zuvor genannten sowie Ammoniumsalzen der niederen aliphatischen Fettsäuren, wie Ammoniumformiat und Ammoniumacetat als Konditionierungsmittel bei einer relativen Feuchte von 5 % bis 40 %. In der DE 10 2006 036 467 werden Verfahren zur Aufbereitung von Kieserit enthaltenden gemahlenen Kalirohsalzen beschrieben. Dort werden als Konditionierungsmittel dem aufgemahlenen Kalirohsalz eine Kombination aus aromatischen Carbonsäuren oder Derivaten, wie Ammoniumsalz einer aromatischen Carbonsäure sowie ein unverzweigter Fettalkohol der Kettenlänge > $C_{10}$ bis $C_{15}$ hinzugefügt.

Vor kurzem wurde in Bezug auf Metallsalze in der CN 102 120 592 beschrieben, dass eine Extraktion von Lithiumcarbonat durch Flotation eines gemischten Salzes von NaCl und Lithiumcarbonat möglich ist. Dazu wird das Rohsalz vermahlen und durch Flotation aufgetrennt, um Lithiumcarbonat zu erhalten.

Allerdings gibt es bisher keine geeigneten Verfahren, Lithiumsalze von Salzbzw. Mineralgemengen trocken abzutrennen. Insbesondere ein Verfahren, das ein Anreichern von Lithiumsalzen, wie z. B. LiCl oder Li-Carnallit (LiCl · $MgCl_2$ · 7 $H_2O$), aus Salzgemengen die insbesondere Salzen aus ozeanischen Salzablagerungen wie Sylvin (KCl), Halit (NaCl), aber auch Kieserit ($MgSO_4$ · $H_2O$), Carnallit (KCl · $MgCl_2$ · 6 $H_2O$), Bischofit ($MgCl_2$ · 6 $H_2O$) ist bisher nicht beschrieben.

Auch ist kein Verfahren zur trockenen Aufbereitung und Reinigung von Lithiumcarbonat haltigen Salzgemengen bekannt.

Die Aufgabe wird erfindungsgemäß durch das Verfahren mit den Merkmalen gemäß Anspruch 1 gelöst. Ansprüche 2 bis 8 stellen geeignete Ausführungsformen dieses erfindungsgemäßen Verfahrens dar. Weiterhin wird die Verwendung bestimmter organischer Verbindungen gemäß den Merkmalen des Anspruchs 9 und vorteilhafterweise insbesondere solcher wie in Anspruch 10 definiert als Konditionierungsmittel zur Trennung von Lithiumsalzen aus Salzgemengen bereitgestellt.

Die Konditionierung des zu trennenden lithiumhaltigen Salz-/Mineralgemenges geschieht dabei nach bekannter Verfahrensweise in einem geeigneten Mischer, z.B. einem Fließbett, in dem das Gemisch gleichzeitig triboelektrisch aufgeladen wird. Das heißt, in einem ersten Aspekt wird ein Verfahren zur Anreicherung und gegebenenfalls Aufreinigung von Lithiumsalzen aus Salz-/Mineralgemengen zum Erhalt einer ersten Lithiumsalz-angereicherten Fraktion und einer zweiten Lithiumsalz-abgereicherten Fraktion bereitgestellt, wobei dieses mittels eines ein- oder mehrstufigen elektrostatischen Trennverfahrens erfolgt. Dieses erfindungsgemäße Verfahren umfasst dabei zumindest ein Vermischen des Salz-/Mineralgemenges mit einem Konditionierungsmittel zum Konditionieren des Salz-/Mineralgemenges, die triboelektrische Aufladung des konditionierten Salz-/Mineralgemenges, sowie die Trennung des Salz-/Mineralgemenges in eine erste Lithiumsalz-angereicherte Fraktion und eine zweite Lithiumsalz-abgereicherte Fraktion.

Vorliegend umfasst der Ausdruck Mineralgemenge auch Rohsalz.

In einer vorteilhaften Ausführungsform wird die so erhaltene Lithiumsalz-angereicherte Fraktion in einem weiteren Aufbereitungsverfahren, wie z. B. die Flotation, behandelt, um ein weiter angereichertes oder aufgereinigtes Konzentrat eines Lithiumsalzes zu gewinnen.

Alternativ kann in einer vorteilhaften Ausführungsform die mit triboelektrischer Aufladung und elektrostatischer Trennung erhaltene Lithiumsalz-angereicherte Fraktion in einem anschließenden Löseprozess, Kristallisations- oder Fällungsprozess weiter aufbereitet und dadurch ein weiter angereichertes oder aufgereinigtes Lithiumsalz gewonnen werden.

Das heißt, erfindungsgemäß wird das Lithiumsalze enthaltende Salz-/Mineralgemenge in einem ersten Schritt elektrostatisch getrennt. Dieses Verfahren hat den Vorteil, dass die Salze als feste Salze eingesetzt werden und eine Herstellung von Salzlösungen mit anschließender Trocknung der Produkte und damit verbundenen hohen Energieaufwand nicht notwendig ist. Das Salz-/Mineralgemenge wird dabei mit geeigneten Konditionierungsmitteln zum Konditionieren vermischt, um dann triboelektrisch aufgeladen zu werden. Dies so aufgeladene konditionierte Salz-/Mineralgemenge wird dann üblicherweise in einem sogenannten Freifallscheider mit zwei Elektroden, zwischen denen ein elektrisches Hochspannungsfeld vorhanden ist, getrennt. Dabei werden die negativ geladenen Teilchen zur positiven Anode und die positiv geladenen Teilchen zur negativen Kathode abgelenkt und anschließend getrennt aufgefangen. Erfindungsgemäß sind dadurch eine Lithiumsalz-angereicherte Fraktion und eine zweite Lithiumsalz-abgereicherte Fraktion erhältlich.

Erfindungsgemäß kann dieses elektrostatische Trennverfahren ein- oder mehrstufig erfolgen. Die Notwendigkeit eines mehrstufigen elektrostatischen Trennverfahrens kann sich ergeben, wenn verschiedene andere, Nicht-Lithiumsalze vorliegen. So kann in einem ersten Schritt eine angereicherte Lithiumsalzfraktion erhalten werden, die noch andere Salzbestandteile aufweist. Diese angereicherte Lithiumsalzfraktion kann dann in einem weiteren elektrostatischen Trennungsschritt unter anderen Bedingungen, z.B. unter Verwendung eines anderen Konditionierungsmittels oder durch Variation anderer Parameter, z.B. der Zungenstellung, weiter aufgetrennt werden.

Zur Herstellung eines Produktes kann es notwendig sein, die aufkonzentrierte, Lithiumsalz-angereicherte Fraktion weiter zu verarbeiten. Dem Fachmann sind geeignete Verfahren (Flotation, Löseprozess, Kristallisations- und Fällungsprozesse) und Bedingungen zur Durchführung dieser Verfahren bekannt.

Es ist vorteilhaft, wenn vor dem Konditionieren das Salz-/Mineralgemenge einer Vermahlung unterworfen wird. Es ist vorteilhaft, wenn diese Vermahlung zu einer Korngröße von 0,1 mm bis 4 mm, bevorzugt von 0,2 mm bis 3,15 mm, besonders bevorzugt 0,2 mm bis 1 mm führt. In einer weiteren Ausführungsform ist die triboelektrische Aufladung und Trennung des konditionierten Salzgemenges/Mineralgemenges eine, die in einem Temperaturbereich von 20° C bis 150° C durchgeführt wird. Es ist weiterhin vorteilhaft, dass die relative Luftfeuchtigkeit beim triboelektrischen Aufladen und elektrostatischen Trennen in einem Bereich von 0,1 % bis 15 % relativer Luftfeuchtigkeit liegt. Besonders geeignete Bereiche sind dabei solche zwischen 1% und 10 %, bzw. besonders bevorzugt von 1% bis 3% relativer Luftfeuchtigkeit. Dem Fachmann ist klar, dass die relative Luftfeuchtigkeit in Abhängigkeit vom Temperaturbereich variieren kann. Geeignete Bedingungen unter Berücksichtigung der Temperatur und der relativen Luftfeuchtigkeit können einfach durch den Fachmann optimiert werden.

Erfindungsgemäß werden bevorzugt Lithiumcarbonat ($Li_2CO_3$), Li-Carnallit ($LiCl \cdot MgCl_2 \cdot 7$ Lithiumsulfat ($Li_2SO_4 \cdot H_2O$) oder Lithiumchlorid (z.B. als $LiCl \cdot H_2O$) oder Lithiumhydroxid (LiOH) mit dem erfindungsgemäßen Verfahren angereichert.

Wie ausgeführt, umfasst ein Schritt des erfindungsgemäßen Verfahrens das Vermischen des Salzgemenges und/oder Mineralgemenge mit einem Konditionierungsmittel zur Konditionierung des Salzgemenges und/oder Mineralgemenges. Dem Fachmann sind geeignete Konditionierungsmittel bekannt. Es zeigte sich vorliegend, dass vorteilhafterweise das Konditionierungsmittel mindestens eines ist ausgewählt aus einer $C_7$ bis $C_{15}$ aromatischen Carbonsäure und Salze hiervon oder deren Derivate und Salze hiervon, ein Alkohol mit $C_5$ bis $C_{20}$ Kohlenstoffatomen (auch als Fettalkohol bezeichnet) oder deren Derivate, z.B. solche mit $C_{10}$ bis $C_{18}$, wie $C_{12}$ bis $C_{16}$ Kohlenstoffatomen, eine Alkansäure mit $C_2$ bis $C_{20}$ Kohlenstoffatomen und Salze hiervon oder deren Derivate und Salze hiervon, wie eine Hydroxycarbonsäure mit $C_2$ bis $C_{20}$ Kohlenstoffatomen und Salze hiervon, oder deren Derivate und Salze hiervon.

Besonders geeignete Vertreter hiervon sind Salicylsäure, Glycolsäure, Zimtsäure, Milchsäure, 2-Aminobenzoesäure, Kalcol oder Ammoniumbenzoat. Es ist vorteilhafter, wenn das Konditionierungsmittel aus einem Gemisch aus mindestens zwei Komponenten besteht, wobei mindestens eine davon eine aromatische Carbonsäure oder Derivate hiervon ist.

Soweit nicht anders angegeben, umfassen die aromatischen Carbonsäuren, Alkohol- und Alkansäuren sowie Hydroxycarbonsäuren auch Salze. Weiterhin eingeschlossen sind Derivate dieser Verbindungen und Salze hiervon. Beispielhaft seien hierfür Ammoniumsalze aromatischer Carbonsäuren, wie Ammoniumbenzoat genannt.

Die Konditionierungsmittel werden in geringen Mengen im ppm-Bereich hinzugegeben. So zeigte sich, dass die Konditionierungsmittel z.B. in folgenden Mengen zugefügt werden können:

| | |
|---|---|
| Aromatische Carbonsäure (z.B. Acetylsalicylsäure): | 20 - 150 g/t, bevorzugt 30 - 50 g/t |
| Ammoniumsalz der aromatischen Carbonsäure (z.B. Ammoniumbenzoat): | 10- 150 g/t, bevorzugt 15 bis 25 g/t |
| Alkohole (z.B. Fettalkohol, $C_{12}$-$C_{16}$): | 10 - 150 g/t, bevorzugt 20 - 30 g/t. |

Üblicherweise liegen die Werte im ppm Bereich.

Durch einfache Versuche kann der Fachmann die geeigneten Konditionierungsmittel und deren Mengen einfach bestimmen, wobei der Grundsatz gilt, dass je komplexer das Salzgemisch im Salz-/Mineralgemenge desto komplexer das Konditionierungsmittel.

Es ist möglich, die gewonnene Lithiumsalz-angereicherte Fraktion ein weiteres Mal oder im späteren Aufbereitungsprozess unter Verwendung einer neuen Konditionierungsmittelkombination (Zusammensetzung ähnlich wie oben beschrieben) elektrostatisch zu trennen.

In einem weiteren Aspekt richtet sich die vorliegende Erfindung auf die Verwendung einer $C_7$ bis $C_{15}$ aromatischen Carbonsäure und Salze hiervon oder deren Derivate und Salze hiervon, ein Alkohol mit $C_5$ bis $C_{20}$ Kohlenstoffatomen oder deren Derivate, eine Alkansäure mit $C_2$ bis $C_{20}$ Kohlenstoffatomen und Salze hiervon oder deren Derivate und Salze hiervon, wie eine Hydroxycarbonsäure mit $C_2$ bis $C_{20}$ Kohlenstoffatomen und Salze hiervon oder deren Derivate und Salze hiervon oder Mischungen hiervon als Konditionierungsmittel zur Trennung von Lithiumsalzen aus Salz-/Mineralgemengen.

Es zeigte sich, dass in einer vorteilhaften Ausführungsform hiervon eine Verwendung einer Kombination einer $C_7$ bis $C_{15}$ aromatischen Carbonsäure und Salze hiervon oder deren Derivate, insbesondere von 2-Aminobenzoesäure und Salze hiervon mit einer Hydroxycarbonsäure mit $C_2$ bis $C_{20}$ Kohlenstoffatomen und Salze hiervon oder deren Derivate und Salze hiervon, insbesondere Milchsäure als Konditionierungsmittel zur Trennung von Lithiumsalzen aus Salzgemengen/Mineralgemengen verwendet wird, als besonders geeignet.

Unter dem Ausdruck "$C_7$ bis $C_{15}$ aromatischer Carbonsäuren" werden alle möglichen Formen aromatischer Carbonsäuren verstanden, einschließlich solcher mit gesättigten und ungesättigten Substituenten. Gleiches gilt für die Alkansäure mit $C_2$ bis $C_{20}$ Kohlenstoffatomen sowie dem Alkohol mit $C_5$ bis $C_{20}$ Kohlenstoffatomen und die Hydroxycarbonsäure mit $C_2$ bis $C_{20}$ Kohlenstoffatomen.

Die Angabe "$C_7$ bis $C_{15}$" schließt alle Formen von $C_7$, $C_8$, $C_9$, $C_{10}$, $C_{11}$, $C_{12}$, $C_{13}$, $C_{14}$ und $C_{15}$ ein. Gleiches gilt für die Angaben "$C_5$ bis $C_{20}$" mit $C_5$, $C_6$, $C_7$, $C_8$, $C_9$, $C_{10}$, $C_{11}$, $C_{12}$, $C_{13}$, $C_{14}$, $C_{15}$, $C_{16}$, $C_{17}$, $C_{18}$, $C_{19}$ und $C_{20}$, und "$C_2$ bis $C_{20}$" mit $C_2$, $C_3$, $C_4$, $C_5$, $C_6$, $C_7$, $C_8$, $C_9$, $C_{10}$, $C_{11}$, $C_{12}$, $C_{13}$, $C_{14}$, $C_{15}$, $C_{16}$, $C_{17}$, $C_{18}$, $C_{19}$ und $C_{20}$, wie auch für $C_{10}$ bis $C_{18}$: $C_{10}$, $C_{11}$, $C_{12}$, $C_{13}$, $C_{14}$, $C_{15}$, $C_{16}$, $C_{17}$, $C_{18}$, z.B. $C_{12}$ bis $C_{16}$: $C_{12}$, $C_{13}$, $C_{14}$, $C_{15}$, $C_{16}$.

Es konnte erfindungsgemäß erfolgreich eine Trennung von Lithiumsalzen von Begleitmineralien erreicht werden. So zeigte sich, wie in den Beispielen näher ausgeführt, dass durch eine einstufige Trennung eines Binärstoffgemisches (10% $Li_2CO_3$, 90% KCl) eine Anreicherung des Lithiumcarbonats auf 62% (Wertstofffraktion) bei einer hohen Ausbeute von 86% und einem Trennfaktor für das Lithiumcarbonat von 95 erreicht werden kann (Versuch 2). Der Trennfaktor $\alpha$ ist dabei wie folgt definiert:

$$\alpha \equiv \frac{c_1^W \cdot c_2^R}{c_1^R \cdot c_2^W} \quad \text{mit } \alpha \geq 1.$$

Darin haben die Symbole folgende Bedeutung:

- $c_1^W$: Konzentration $c$ der Komponente 1 in der Wertstofffraktion $W$

- $c_2^R$: Konzentration $c$ der Komponente 2 in der Restfraktion $R$

- $c_1^R$: Konzentration $c$ der Komponente 1 in der Restfraktion $R$

- $c_2^W$: Konzentration $c$ der Komponente 2 im Wertstofffraktion $W$

Als Konditionierungsmittel wurden hierbei im Wesentlichen Lewis-Säuren der vorgenannten Gruppen eingesetzt. Diese werden in einem ppm-Bereich verwendet. Die Trennselektivität wird dabei sowohl von der Temperatur als auch von den gewählten Konditionierungsmitteln beeinflusst. Ebenfalls spielt die relative Luftfeuchtigkeit während des elektrostatischen Trennverfahrens eine Rolle. Dem Fachmann sind die notwendigen Versuche zur Bestimmung der geeigneten Bedingungen bekannt und kann diese einfach optimieren. Dabei kann insbesondere unter Variation des Konditionierungsmittels die Trennselektivität und der Trennfaktor beeinflusst werden. Während einige Konditionierungsmittel eine hohe Anreicherung des Lithiumsalzes in der Lithiumsalz-angereicherten Fraktion erlauben, können andere Kombinationen von Konditionierungsmittel die Ausbeute in der Lithiumsalz angereicherten Fraktion deutlich erhöhen.

Wie in den Beispielen dargestellt, reichen einzelne Konditionierungsmittel aus, Kombinationen von Konditionierungsmitteln können aber zu weiteren Verbesserungen führen.

Für ein Gemisch von Lithiumcarbonat von 75% und 25% KCl konnte eine ebenfalls verbesserte Anreicherung gefunden werden. Es konnte sowohl die Trennung von Lithiumsalzen von diversen anderen Begleitmineralien als auch binärer Gemische selektiv mit hohen Ausbeuten durchgeführt werden. Gleiches gilt für die Trennung komplexer Multikomponentengemische, z.B. Zusammensetzungen mit Sylvin, Kieserit, Anhydrit, Halit, Langbeinit und Carnallit mit Lithiumcarbonat und/oder Lithiumchlorid. Gerade bei komplexen Multikomponentengemischen kann dabei ein mehrstufiges Trennverfahren erfolgreich sein.

Auch geringe Spuren von Lithiumsalzen konnten durch elektrostatische Aufreinigung mit hoher Selektivität angereichert werden. Dies ist insbesondere wichtig, da üblicherweise geringe Lithiumsalzkonzentrationen in Salz-/Mineralgemenge vorkommen, z.B. im Fall von Lösungen aus Salzseen mit hauptsächlich NaCl und KCl und geringen LiCl-Anteil. Gleiches gilt für lithiumsalzarme Produktionsrückstände, die ebenfalls aufgearbeitet werden können.

Die Bedingungen für die elektrostatische Auftrennung sind dabei in den Bereichen, wie sie auch für die elektrostatische Auftrennung von z.B. Kieserit eingesetzt werden, d.h. es werden ähnliche Spannungen angelegt.

Die Erfindung wird anhand der nachfolgenden Ausführungsbeispiele näher erläutert. Dabei werden unterschiedliche Konditionierungsmittel (Tabelle 2, Beispiel 1) und Kombinationen (Tabelle 1, Beispiel 1) hiervon eingesetzt. Ebenfalls dargestellt wird die Leistungsfähigkeit des erfindungsgemäßen Verfahrens zur Aufreinigung und Anreicherung von Lithiumsalzen (Lithiumchlorid oder Lithiumcarbonat) aus mehr- und multikomponentigen Salzmischungen. Die Ausführungsbeispiele stellen mögliche Ausführungsformen dar, ohne dass die Erfindung auf diese begrenzt ist.

Beispiel 1

Trennverhalten eines binären KCl/Li$_2$CO$_3$ Gemisches (90:10) bei 100°C mit einer Kombination von zwei Konditionierungsmitteln.

Die Bedingungen zur Auftrennung waren dabei die folgenden: Die Spannung betrug 80kV mit einem Elektrodenabstand von 20cm, die Feldstärke war somit 4 kV/cm. Die Versuche wurden bei relativen Luftfeuchten von 1% bis 10% durchgeführt.

Die Versuche wurden mit einer Kombination von zwei Konditionierungsmitteln, wie in der Tabelle 1 angegeben, durchgeführt. Die Konditionierungsmittel wurden dabei in folgenden Mengen eingesetzt:

**Tabelle 1:** Trennverhalten eines binären KCl/Li$_2$CO$_3$-Gemisches der Zusammensetzung 90:10 bei 100 °C mit zwei Konditionierungsmitteln, die jeweils mit 100 g/t dosiert worden sind und einer relativen Luftfeuchte von 1,6%.

| Versuch | Konditionierung | Li$_2$CO$_3$-Gehalt [%] | | $\eta$-Li$_2$CO$_3$ [%] | | Li$_2$CO$_3$-Trennfaktor |
| :---: | :---: | :---: | :---: | :---: | :---: | :---: |
| | | P | N | P | N | |
| 1 | Salicylsäure Glykolsäure | 1,0 | 55,4 | 8,2 | 91,8 | N/P = 128 |
| 2 | Salicylsäure Fettsäure C12-C18 | 1,7 | **62,3** | 13,8 | 86,2 | N/P = 95 |
| 3 | Salicylsäure Zimtsäure | 0,9 | 46,3 | 6,4 | 93,6 | N/P = 101 |
| 4 | 2-Aminobenzoesäure Milchsäure | **0,5** | 53,2 | **4,9** | **95,1** | **N/P = 226** |
| 5 | Kalcol Ammoniumbenzoat | 0,8 | 41,5 | 5,2 | 94,8 | N/P = 94 |

Die Fettsäure ist eine technische Fettsäure mit C12 bis C18 Resten, z.B. erhältlich von Edenor, Emery. In der Tabelle 1 sind die Ergebnisse dargestellt. Ebenfalls angegeben ist der Trennfaktor hierzu. Wie zu erkennen, zeigen einige Kombinationen eine hohe Selektivität auf, und/oder andere eine hervorragende Anreicherung.

In der Tabelle 2 ist das Trennverhalten der KCl/Li$_2$CO$_3$-Mischung (90:10) mit einem Konditionierungsmittel (Dosierung 100 ppm bzw. 100 g/t) dargestellt.

**Tabelle 2:** Trennverhalten eines binären KCl/Li$_2$CO$_3$-Gemisches der Zusammensetzung 90:10 bei 100 °C mit einem Konditionierungsmittel jeweils mit 100 g/t dosiert (relat. Luftfeuchte 1,6 %).

| Versuch | Konditionierung (Dosierung) | Li$_2$CO$_3$-Gehalt [%] | | $\eta$-Li$_2$CO$_3$ [%] | | Li$_2$CO$_3$-Trennfaktor |
| :---: | :---: | :---: | :---: | :---: | :---: | :---: |
| | | P | N | P | N | |
| 6 | Zimtsäure | **0,6** | 34,6 | 6,2 | 93,8 | N/P = 82 |
| 7 | Salicylsäure | 1,1 | **49,5** | 7,6 | 92,4 | **N/P = 91** |
| 8 | 2-Aminobenzoesäure | **0,6** | 32,4 | 4,7 | **95,3** | N/P = 81 |
| 9 | Milchsäure | 7,5 | 10,7 | 78,0 | 22,0 | N/P = 1,5 |
| 10 | Kalcol | 7,2 | 8,1 | 57,2 | 42,8 | N/P = 1,1 |

Im Vergleich zu der Tabelle 1 zeigt die Tabelle 2, dass die Verwendung eines einzigen Konditionierungsmittels bereits zu guten Selektivitäten führen kann. Eine Kombination mit einem zweiten Konditionierungsmittel kann aber zu einer weiteren Erhöhung der Selektivität und einer gleichzeitig verbesserten Anreicherung und somit zu einem verbesserten Trennfaktor führen (siehe z.B. Versuch 4).

Beispiel 2

Untersuchung verschiedener Mengenverhältnisse im binären KCl/ Li$_2$CO$_3$-Gemisch.

Die Versuchsbedingungen waren die gleichen wie in Beispiel 1 mit der Ausnahme, dass als Konditionierungsmittel Zimtsäure (100 ppm) eingesetzt wurde und die Mengenverhältnisse der einzelnen Salzkomponenten variiert wurden. Auch bei einem hohen Anteil an Lithiumcarbonat kann eine weitere Aufreinigung erzielt werden.

**Tabelle 3:** Charakteristische Kennzahlen bei 100 °C mit Zimtsäure.

| Zusammensetzung | $Li_2CO_3$-Gehalt [%]* | | $\eta$-$Li_2CO_3$ [%]* | | Trennfaktor |
|---|---|---|---|---|---|
| | P | N | P | N | |
| $Li_2CO_3$, KCl (50:50) | 39,9 | 77,7 | 63,4 | 36,6 | N/P = 5,2 |
| $Li_2CO_3$, KCl (75:25) | 63,9 | 82,5 | 79,3 | 20,7 | N/P = 2,7 |

Beispiel 3

Trennung von Lithiumsalzen aus verschiedenen Mineralsalzgemischen.

Im Folgenden wurden die genannten Lithiumsalze in einem Verhältnis von 10:90 mit der angegebenen Mineralphase vermischt und unter den Bedingungen wie in Beispiel 1 ausgeführt, elektrostatisch aufgetrennt. Als Konditionierungsmittel wurde dabei Zimtsäure (100 ppm) eingesetzt. Die Temperatur betrug 100°C.

**Tabelle 4:** Charakteristische Kennzahlen für die Trennung von Lithiumsalzen (Ausgangsgehalt: 10 % des zugesetzten Lithiumsalzes) und diversen Mineralien bei 100 °C mit Zimtsäure (100 ppm).

| Mineralphase** | Li-Salz | Gehalt [%]* | | $\eta$ [%]* | | Trennfaktor |
|---|---|---|---|---|---|---|
| | | P | N | P | N | |
| KCl | $Li_2CO_3$ | 0,7 | 32,9 | 6,5 | 93,5 | N/P = 70 |
| | $Li_2SO_4 \cdot H_2O$ | 3,5 | 41,5 | 20,5 | 79,5 | N/P = 20 |
| | LiCl | 9,2 | 15,3 | 52,3 | 47,7 | N/P = 1,8 |
| NaCl | $Li_2CO_3$ | 1,4 | 25,6 | 13,4 | 86,6 | N/P = 25 |
| | $Li_2SO_4 \cdot H_2O$ | 6,2 | 24,0 | 41,9 | 58,1 | N/P = 4,8 |
| | LiCl | 12,2 | 2,2 | 87,5 | 12,5 | P/N = 6,2 |
| $CaSO_4$ | $Li_2CO_3$ | 7,3 | 30,9 | 59,4 | 40,6 | N/P = 5,7 |
| | $Li_2SO_4 \cdot H_2O$ | 10,5 | 10,7 | 77,6 | 22,4 | N/P = 1,0 |
| | LiCl | 11,1 | 3,5 | 90,5 | 9,5 | P/N = 3,5 |
| $MgSO_4 \cdot H_2O$ | $Li_2CO_3$ | 7,0 | 17,3 | 61,8 | 38,2 | N/P = 2,8 |
| | $Li_2SO_4 \cdot H_2O$ | 10,5 | 13,4 | 77,5 | 22,5 | N/P = 1,3 |
| | LiCl | 10,6 | 7,6 | 88,4 | 11,6 | P/N = 1,4 |
| * des entsprechenden Lithiumsalzes **Salzkomponente, Rohsalzkomponente | | | | | | |

Deutlich ist zu erkennen, dass die elektrostatische Aufbereitung unterschiedlicher Lithiumsalze mit unterschiedlichen Salzkomponenten/ Mineralphasen zu unterschiedlichen Trennfaktoren führen. Hieraus ergibt sich die folgende triboelektrische Reihe dieser Salzkomponenten/Mineralien:

$$KCl < LiCl < NaCl < MgSO_4 \cdot H_2O < Li_2SO_4 \cdot H_2O \approx CaSO_4$$

$$< MgSO_4 \cdot H_2O < Li_2CO_3 < Na_2CO_3.$$

Ausgehend hiervon können die entsprechenden Bedingungen, z.B. das Konditionierungsmittel, des elektrostatischen Trennverfahrens ausgewählt werden.

Beispiel 4

Trennung ternärer Lithiümsalzgemische.

**Tabelle 5:** Trennergebnisse ternärer Lithiumsalzgemische bei 100 °C

| Zusammensetzung | Konditionierungsmittel | Gehalt [%]* | | $\eta$ [%]* | | Trennfaktor |
|---|---|---|---|---|---|---|
| | | P | N | P | N | |
| NaCl, KCl, LiCl (60:30:10) | Salicylsäure, Glykolsäure | 8,3 | 4,2 | 83,4 | 16,6 | P/N =2,1 |
| | Acetylsalicylsäure, Ammoniumbenzoat, Kalcol | 9,3 | 5,0 | 78,9 | 21,1 | P/N = 2,0 |
| NaCl, MgSO$_4$·7H$_2$O, Li$_2$CO$_3$ (60:30:10) | Acetylsalicylsäure, Ammoniumbenzoat, Kalcol | 10,1 | 8,3 | 83,2 | 16,8 | P/N = 1,2 |
| | Salicylsäure, Glykolsäure, Fettsäure | 9,8 | 7,1 | 89,1 | 10,9 | P/N = 1,4 |
| NaCl, KCl, Li$_1$CO$_3$ (60:30:10) | Salicylsäure, Glykolsäure | 2,5 | 66,4 | 27,5 | 72,5 | N/P = 77 |
| | Acetylsalicylsäure, Ammoniumbenzoat, Kalcol | 0,8 | 58,5 | 7,9 | 92,1 | N/P = 187 |
| KCl, MgSO$_4$·H$_2$O, Li$_2$CO$_3$ (60:30:10) | Salicylsäure, Glykolsäure | 8,4 | 7,2 | 89,4 | 10,6 | P/N = 1,2 |
| | Acetylsalicylsäure, Ammoniumbenzoat, Kalcol | 4,8 | 20,2 | 48,9 | 51,1 | N/P = 5,0 |
| * des entsprechenden Lithiumsalzes | | | | | | |

In der **Tabelle 5** sind die Trennergebnisse ternärer Lithiumsalzgemische bei 100°C angegeben. Ebenfalls angegeben sind dort die eingesetzten Konditionierungsmittel. Die Konditionierungsmittel wurden dabei in Mengen von je 50 g/t eingesetzt. Die Versuchsbedingungen sind analog gewählt wie im Beispiel 1.

Beispiel 5

Trennung komplexer Multikomponentengemische.

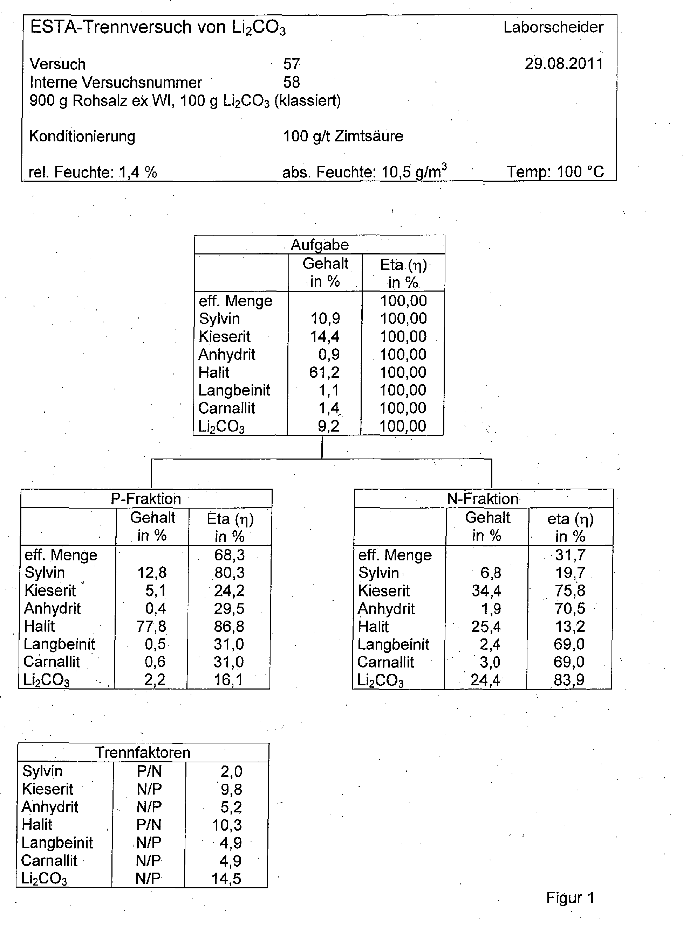

In der Figur 1 ist die Trennung von einem komplexen Salzgemenge/Rohsalz mit Zimtsäure als Konditionierungsmittel bei 100°C dargestellt. Die weiteren Versuchsbedingungen sind wie in Beispiel 1, wobei die relative Feuchte 1,4% und die absolute Feuchte 10,5 g/cm$^3$ beträgt. Deutlich ist die Anreicherung des Lithiumcarbonats in der N-Fraktion zu sehen, während das NaCl (Halit) und das
KCl (Sylvin) in der N-Fraktion abgereichert sind.

Beispiel 6

Einfluss der Temperatur und der relativen Feuchte auf das Trennergebnis.
Um den Einfluss der Temperatur bzw. der relativen Feuchte auf das Gesamtergebnis zu untersuchen, wurden ternäre Gemische aus NaCl/KCl (Verhältnis 75%/25%) mit geringen Lithiumchloridgehalten aufgetrennt.

**Tabelle 6** Trennergebnisse Lithiumchlorid armer NaCl/KCl-Salzgemische in Abhängigkeit der Temperatur (Konditionierungsmittel Salicylsäure 100g/t)

| rel. Feuchte | T/°C | Ausgangsgehalt LiCl/[%] | LiCl-Gehalt [%] | | $\eta$-LiCl [%] | | LiCl-Trennfaktor |
|---|---|---|---|---|---|---|---|
| | | | P | N | P | N | |
| 5,2% | 50 | 0,2 | 0,67 | 0,004 | 93,3 | 1,0 | P/N=169 |
| 1,1% | 100 | 0,3 | 0,55 | 0,18 | 61,4 | 38,6 | P/N = 3,1 |
| 0,2% | 150 | 0,3 | 0,61 | 0,12 | 70 | 30 | P/N = 5,1 |

In der Tabelle 6 sind die Ergebnisse dargestellt. Es wird gezeigt, dass auch bei geringem Anteil von Lithiumsalz, hier Lithiumchlorid, eine selektive Aufreinigung erreicht werden kann. Dieses Beispiel ist angelehnt an Zusammensetzungen wie sie typischerweise aus natürlichen Salzseen vorliegen. Hierbei ist die Lithiumsalzkonzentration gering, während große Mengen an KCl und NaCl vorliegen.

Mit Li-Carnallit können analoge Ergebnisse erhalten werden.

Wie aus den Beispielen deutlich wird, erlaubt das erfindungsgemäße Verfahren eine Anreicherung und gegebenenfalls Aufreinigung von Lithiumsalzen aus Salz-/Mineralgemenge mit Hilfe eines ein- oder mehrstufigen elektrostatischen Trennverfahrens. Es zeigte sich, dass die angegebenen Konditionierungsmittel geeignet sind, die Aufreinigungsmenge und Selektivität zu beeinflussen und zu verbessern.

**Patentansprüche**

1. Verfahren zur Anreicherung und gegebenenfalls Aufreinigung von Lithiumsalzen aus Salz-/Mineralgemengen zum Erhalt einer ersten Lithiumsalz-angereicherten Fraktion und einer zweiten Lithiumsalz-abgereicherten Fraktion mittels eines ein- oder mehrstufigen elektrostatischen Trennverfahrens, wobei dieses umfasst:

   a) Vermischen des Salzgemenges mit einem Konditionierungsmittel zum Konditionieren des Salz-/Mineralgemenges;
   b) Triboelektrische Aufladung des konditionierten Salz-/Mineralgemenges;
   c) Trennen des Salz-/Mineralgemenges in eine erste Lithiumsalz-angereicherte Fraktion und eine zweite Lithiumsalz-abgereicherte Fraktion in einem elektrischen Feld.

2. Verfahren nach Anspruch 1, **dadurch gekennzeichnet, dass** aus der Lithiumsalz-angereicherten Fraktion in einem anschließenden Aufbereitungsprozess ein weiter angereichertes Konzentrat eines Lithiumsalzes gewonnen wird.

3. Verfahren nach einem der vorherigen Ansprüche, **dadurch gekennzeichnet, dass** vor dem Konditionieren des Salzgemenges eine Vermahlung durchgeführt wird, insbesondere eine Vermahlung auf eine Korngröße von 0,1 mm bis 4 mm, bevorzugt 0,2 mm bis 3,15 mm.

4. Verfahren nach einem der vorherigen Ansprüche, wobei das Lithiumsalz eines ist ausgewählt aus Lithiumcarbonat, Lithiumchlorid, Lithiumchlorid-Monohydrat, Lithium-Carnallit, Lithiumhydroxid, Lithiumsulfat-Monohydrat oder Lithiumhydroxid-Monohydrat oder Gemischen daraus.

5. Verfahren nach einem der vorherigen Ansprüche, **dadurch gekennzeichnet, dass** das Konditionierungsmittel mindestens eines ist ausgewählt aus einer $C_7$ bis $C_{15}$ aromatischen Carbonsäure und Salze hiervon oder deren Derivate und Salze hiervon, ein Alkohol mit $C_5$ bis $C_{20}$ Kohlenstoffatomen oder deren Derivate, eine Alkansäure mit $C_2$ bis $C_{20}$ Kohlenstoffatomen und Salze hiervon oder deren Derivate und Salze hiervon, wie eine Hydroxycarbonsäure mit $C_2$ bis $C_{20}$ Kohlenstoffatomen und Salze hiervon, oder deren Derivate und Salze hiervon.

6. Verfahren nach einem der vorherigen Ansprüche, **dadurch gekennzeichnet, dass** das Konditionierungsmittel aus mindestens zwei Komponenten besteht, wobei mindestens eine davon eine aromatische Carbonsäure oder deren Derivate ist.

7. Verfahren nach einem der vorherigen Ansprüche, **dadurch gekennzeichnet, dass** die triboelektrische Aufladung und Trennung des konditionierten Salzgemenges und/oder Mineralgemenges in einem Temperaturbereich von 20°C bis 150° C durchgeführt wird.

8. Verfahren nach einem der vorherigen Ansprüche, **dadurch gekennzeichnet, dass** die relative Luftfeuchtigkeit beim triboelektrischen Aufladen und elektrostatischen Trennen in einem Bereich von 0,1 % bis 15% relativer Luftfeuchtigkeit liegt.

9. Verwendung einer $C_7$ bis $C_{15}$ aromatischen Carbonsäure und Salze hiervon oder deren Derivate und Salze hiervon, eines Alkohols mit $C_5$ bis $C_{20}$ Kohlenstoffatomen oder deren Derivate, eine Alkansäure mit $C_2$ bis $C_{20}$ Kohlenstoffatomen und Salze hiervon oder deren Derivate und Salze hiervon, wie eine Hydroxycarbonsäure mit $C_2$ bis $C_{20}$ Kohlenstoffatomen und Salze hiervon, oder deren Derivate und Salze hiervon oder Mischungen hiervon als Konditionierungsmittel zur Trennung von Lithiumsalzen aus Salzgemengen und/oder Mineralgemengen.

10. Verwendung nach Anspruch 90, wobei eine Kombination einer $C_7$ bis $C_{15}$ aromatischen Carbonsäure und Salze hiervon oder deren Derivate, insbesondere von 2-Aminobenzoesäure und Salze hiervon mit einer Hydroxycarbonsäure mit $C_2$ bis $C_{20}$ Kohlenstoffatomen und Salze hiervon oder deren Derivate und Salze hiervon, insbesondere Milchsäure als Konditionierungsmittel zur Trennung von Lithiumsalzen aus Salz-/Mineralgemengen verwendet wird.

ESTA-Trennversuch von $Li_2CO_3$        Laborscheider

| | | |
|---|---|---|
| Versuch | 57 | 29.08.2011 |
| Interne Versuchsnummer | 58 | |

900 g Rohsalz ex WI, 100 g $Li_2CO_3$ (klassiert)

Konditionierung        100 g/t Zimtsäure

rel. Feuchte: 1,4 %        abs. Feuchte: 10,5 g/m³        Temp: 100 °C

| Aufgabe | | |
|---|---|---|
| | Gehalt in % | Eta (η) in % |
| eff. Menge | | 100,00 |
| Sylvin | 10,9 | 100,00 |
| Kieserit | 14,4 | 100,00 |
| Anhydrit | 0,9 | 100,00 |
| Halit | 61,2 | 100,00 |
| Langbeinit | 1,1 | 100,00 |
| Carnallit | 1,4 | 100,00 |
| $Li_2CO_3$ | 9,2 | 100,00 |

| P-Fraktion | | |
|---|---|---|
| | Gehalt in % | Eta (η) in % |
| eff. Menge | | 68,3 |
| Sylvin | 12,8 | 80,3 |
| Kieserit | 5,1 | 24,2 |
| Anhydrit | 0,4 | 29,5 |
| Halit | 77,8 | 86,8 |
| Langbeinit | 0,5 | 31,0 |
| Carnallit | 0,6 | 31,0 |
| $Li_2CO_3$ | 2,2 | 16,1 |

| N-Fraktion | | |
|---|---|---|
| | Gehalt in % | eta (η) in % |
| eff. Menge | | 31,7 |
| Sylvin | 6,8 | 19,7 |
| Kieserit | 34,4 | 75,8 |
| Anhydrit | 1,9 | 70,5 |
| Halit | 25,4 | 13,2 |
| Langbeinit | 2,4 | 69,0 |
| Carnallit | 3,0 | 69,0 |
| $Li_2CO_3$ | 24,4 | 83,9 |

| Trennfaktoren | | |
|---|---|---|
| Sylvin | P/N | 2,0 |
| Kieserit | N/P | 9,8 |
| Anhydrit | N/P | 5,2 |
| Halit | P/N | 10,3 |
| Langbeinit | N/P | 4,9 |
| Carnallit | N/P | 4,9 |
| $Li_2CO_3$ | N/P | 14,5 |

Figur 1

Europäisches Patentamt
European Patent Office
Office européen des brevets

**EUROPÄISCHER RECHERCHENBERICHT**

Nummer der Anmeldung

EP 13 00 5447

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 36 22 105 A1 (METALLGESELLSCHAFT AG [DE]) 7. Januar 1988 (1988-01-07) * Ansprüche * ----- | 1-10 | INV. B03C7/00 C01D15/00 C01D15/08 |
| Y | DE 11 80 331 B (KALI CHEMIE AG) 29. Oktober 1964 (1964-10-29) * Ansprüche * ----- | 1-10 | |
| Y | DE 31 27 946 C1 (KALI & SALZ AG) 27. Januar 1983 (1983-01-27) * Ansprüche * ----- | 1-10 | |
| Y | DE 34 39 042 A1 (KALI & SALZ AG [DE]) 30. April 1986 (1986-04-30) * Ansprüche; Beispiele * ----- | 1-10 | |
| Y | DE 10 56 551 B (KALI FORSCHUNGSANSTALT GMBH) 6. Mai 1959 (1959-05-06) * Ansprüche; Tabellen * ----- | 1-10 | |
| Y | US 3 835 996 A (SINGEWALD A ET AL) 17. September 1974 (1974-09-17) * Ansprüche; Beispiele; Tabellen * ----- | 1-10 | RECHERCHIERTE SACHGEBIETE (IPC) B03C C01D |
| Y | WO 2011/082444 A1 (GALAXY RESOURCES LTD [AU]; TAN IGNATIUS KIM SENG [AU]) 14. Juli 2011 (2011-07-14) * Ansprüche; Abbildungen * ----- | 1-10 | |
| Y | GB 804 962 A (CHEMPATENTS INC) 26. November 1958 (1958-11-26) * Ansprüche * ----- | 1-10 | |

Der vorliegende Recherchenbericht wurde für alle Patentansprüche erstellt

| Recherchenort | Abschlußdatum der Recherche | Prüfer |
|---|---|---|
| Den Haag | 31. März 2014 | Engelen, Karen |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 13 00 5447

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2014

| Im Recherchenbericht angeführtes Patentdokument | Datum der Veröffentlichung | Mitglied(er) der Patentfamilie | Datum der Veröffentlichung |
|---|---|---|---|
| DE 3622105 A1 | 07-01-1988 | AU 601990 B2<br>AU 7499587 A<br>CA 1297265 C<br>DE 3622105 A1 | 27-09-1990<br>07-01-1988<br>17-03-1992<br>07-01-1988 |
| DE 1180331 B | 29-10-1964 | DE 1180331 B<br>US 3388794 A | 29-10-1964<br>18-06-1968 |
| DE 3127946 C1 | 27-01-1983 | KEINE | |
| DE 3439042 A1 | 30-04-1986 | CA 1250251 A1<br>DD 239731 A5<br>DE 3439042 A1<br>ES 8605397 A1<br>FR 2572310 A1<br>GB 2166067 A<br>SU 1433406 A3<br>US 4767506 A | 21-02-1989<br>08-10-1986<br>30-04-1986<br>01-09-1986<br>02-05-1986<br>30-04-1986<br>23-10-1988<br>30-08-1988 |
| DE 1056551 B | 06-05-1959 | DE 1056551 B<br>US 3217876 A | 06-05-1959<br>16-11-1965 |
| US 3835996 A | 17-09-1974 | KEINE | |
| WO 2011082444 A1 | 14-07-2011 | AU 2010341402 A1<br>CA 2786317 A1<br>CN 102892708 A<br>WO 2011082444 A1 | 26-07-2012<br>14-07-2011<br>23-01-2013<br>14-07-2011 |
| GB 804962 A | 26-11-1958 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1667814
- DE 102006036467

- CN 102120592

**In der Beschreibung aufgeführte Nicht-Patentliteratur**

- **G. FRICKE.** *Kali und Steinsalz,* 1986, vol. 9, 278-297